# EUROPEAN PATENT APPLICATION

(11) **EP 2 088 037 A1**
(43) Date of publication of application: **12.08.2009**
(21) Application number: 08382006.8
(22) Date of filing: 11.02.2008
(51) Int. Cl.: B60R 21/276, B60R 21/239

(54) **Active air release system**

(71) Applicant: Dalphi Metal España, S.A., 28006 Madrid (ES)
(72) Inventor: Arez, Luis, 47151, Valladolid (ES); Rueda, Roberto, 47151, Boecillo, Valladolid (ES)
(74) Representative: Elzaburu Marquez, Alberto

(57) **Abstract**

An active air release system for the adaptation of a bag (4) of an airbag module to different impact scenarios, said bag (4) being inflated by the air which is generated by an air generator (5), the system comprising a device (1) which in turn comprises a body (2) and an explosive charge (3), said explosive charge being detonated by means of an electrical signal such that the body (2) of the device (1) provides an airway for the air generated by the generator (5) to the exterior of the bag (4) of the airbag module.

## Description

### SCOPE OF THE INVENTION

The present invention refers to an active air release system to adapt the bag of an airbag module for different impact situations.

### BACKGROUND TO THE INVENTION

Currently, vehicles incorporate a large number of passive security devices which must work together in a programmed manner at the moment of an impact for the purpose of minimising the risk of harm to the occupants of the vehicles in question.

The combination of diverse passive systems such as airbag modules, structures, seats, seat belts, etc. causes there to build up an accumulation of the tolerances between such passive systems which are inherent in their set-up and operation.

Furthermore, the passive systems mentioned have the purpose of ensuring operation and performance in a wide range of positions of the occupants and, moreover, coping with different collision velocities.

It is therefore necessary for existing security devices to be capable of operating correctly with the different regulation and consumer crash test configurations (for head-on crash or barrier crash tests, and for lateral or post crash tests), and in foreseeable modifications to these configurations (increased impact velocity, change of barrier, etc.).

The so-called Dual Stage generators are known to the art, specifically through patent document EP 1512588 B1, which are load generators such that they make it possible to achieve various different levels of pressure within one and the same volume of an airbag module. In these generators, the loads may be released independently as required: a load 1 for a pressure level 1, load 1 and load 2 at the same time for pressure level 2, and load 1 and load 2 out of phase for a pressure level 3. This type of system suffers from the disadvantage of not being applicable for a wide range of different pressure levels.

There are also known a number of devices to control the volume of the bag of an airbag module. One of these is denominated "Tether Activation Unit", or TAU, which is a pyrotechnic device normally used in head-on modules to control the volume of the bag of an airbag module. This device, on activation, releases an external strap on the bag which allows the bag in question to increase its volume. The TAU is a pyrotechnic device normally used in head-on modules to control the volume of the bag and not to control the flow of the gas to the exterior. On receiving the electrical signal, this device, the TAU, generates an explosion which breaks the device into two parts to release a strap which is retained by the device and which is a part of the bag. In this manner, the pressure falls as the volume of the bag increases. The problem presented by a device such as the TAU is that the pressure control is not reliable and controlled, with the associated problems involved in airbag modules.

There are other configurations known to the art to adapt an airbag module to different impact situations, such as those described in patent documents US 5209510 A1, US 20050017485 A1, US 20030075223 and US 22020125703 A1. In these solutions described the air release of the bag in the airbag module is not controlled or driven in an active manner, and therefore the adaptability of such a module when faced with different impact situations is low, with the problems which that supposes for the occupants of a vehicle in the event of a collision.

In other known documents, such as in US 6863304 B2, for example, a form of air release is described which is controlled up to a point, defined by elements inherent in the bag, in which the air release of the indicated bag of the airbag module is controlled by the resistance of the flow obtained by the friction of the gas in the bag with a tubular surface. The problem which a solution of such a type supposes is that the air release is controlled neither efficiently nor fully, nor in an active manner.

In patent document US6899134 B2, a discharge valve is described which controls the air release of the bag of an airbag module, the said valve comprising a fixed element and a moving element with the said moving element in turn comprising some open areas and some areas which are not open. For this system to operate, it is necessary for there to occur relative movement of the moving element with respect to the fixed element in relation to the evacuation of the gas from the bag of the airbag module. This solution is very complex, apart from the fact that it has the inherent problem that it activates slowly and progressively, and therefore less effectively.

There are in addition solutions in the art designed to orientate the outflow of the gas arising from the air release of the bag of an airbag module such as those described in documents JP 2000052916 and FR 2825054 A.

A device is described in document DE 10251483 A1 to inflate and deflate gas-filled bags with a generator and an air release device coupled to the gas generator which has an outlet chamber which is joined to the inlet orifice of the generator and further comprises an outlet orifice into the interior of the bag, and the air release device comprises an outlet orifice and a moving air release body which regulates the flow between the outlet chamber and the outlet orifice. The problems posed by such a device are that on the one hand since the air release device for inflating and deflating gas bags is connected to the generator, such devices cannot be fitted away from the generator and that means that they are of no use in the event that it is appropriate to locate the device in strategic areas to allow the gas to be released in order to reduce the internal pressure of the bag. Furthermore, such a device, which comprises a moving element to regulate the flow of air, does not have the necessary versatility to be able for example to cause a deliberate rupture for the purpose of opening an orifice in order to discharge to the exterior of the air bag. Moreover, a device of this type does not permit independent, standard generators to be used, but instead the unit specially designed for this purpose has to be employed.

The present invention is intended to resolve these disadvantages.

### SUMMARY OF THE INVENTION

The present invention thus proposes an active air release system to adapt the bag of an airbag module to different impact situations. The air release system proposed by the invention provides two or more levels of internal pressure in the airbag of the airbag module which consequently provides it with a capacity to adapt to the different positions and sizes of occupant and different impact velocities, thus allowing it to respond in an effective manner to the demands expressed above.

The active air release system proposed by the invention thus comprises a device which in its turn comprises a body and an explosive charge this explosive charge being detonated by means of an electric signal such that the body of the device allows a flow of air to the exterior of the bag of the airbag.

Other characteristics and advantages of the present invention will be seen in the following detailed description of the embodiments which illustrate its purpose with reference to the accompanying figures.

### DESCRIPTION OF THE FIGURES

Figure 1a shows a schematic of the air release system according to the invention, active and open in a situation with no impact detected.
Figure 1b shows a schematic of the air release system according to the invention, active and closed, in a situation with an impact detected.
Figure 2a shows a detail of the section of the air release system device according to this invention in a situation with the air release closed, when the device is separated from the generator.
Figure 2b shows a detail of the section of the air release system device according to this invention in a situation with the air release open, when the device is separated from the generator.
Figure 3 shows a detail of the section of the air release system device according to this invention in a situation with the air release closed as in Figure 2a, but with the device connected to a diffuser, and therefore closer to the generator, showing the flow of the passage of gas into the bag of the airbag module.
Figure 4 shows a detail of the section of the air release system device according to this invention in a situation with the air release open as in Figure 2b, but with the device connected to a diffuser, and therefore closer to the generator, showing the flow of the passage of gas into the bag of the airbag module.
Figure 5 shows a graph of time against pressure in which are shown the changes in the release of air from the air release system device according to the present invention.
Figure 6 shows a detail of the location of the air release system device according to the invention in which the device is located in a fixed area of the airbag module.
Figure 7 shows a detail of the location of the air release system device according to the invention in which the device is located in the body of the airbag, with a geometry adapted to be compatible with it.
Figure 8 shows a detail of the location of the air release system device according to the invention in which the device is secured to the side structure of the vehicle seat.
Figure 9 shows a section of the location of the air release system device according to the invention in which the device is secured by means of a clip.
Figure 10 shows a section of the location of the air release system device according to the invention in which the device is secured by means of a key.
Figure 11 shows a section of the location of the air release system device according to the invention in which the device is secured by means of the deformation of the material of which it is made.

### DETAILED DESCRIPTION OF THE INVENTION

The active air release system proposed in the invention comprises a device 1 which in turn comprises a body 2 and an explosive charge 3, said explosive charge 3 being detonated by means of an electrical signal such that the body 2 of the device 1 provides an airway for the air generated by an air generator 5 to the exterior of the bag 4 of the airbag module.

One of the preferred embodiments of the invention is that of an application in intelligent impact detection systems (prior to the occurrence of the impact) such that different levels of pressure may be obtained with the same retention system. Nevertheless, the invention may also be applied in other situations in which it is necessary to have different levels of pressure in one and the same system.

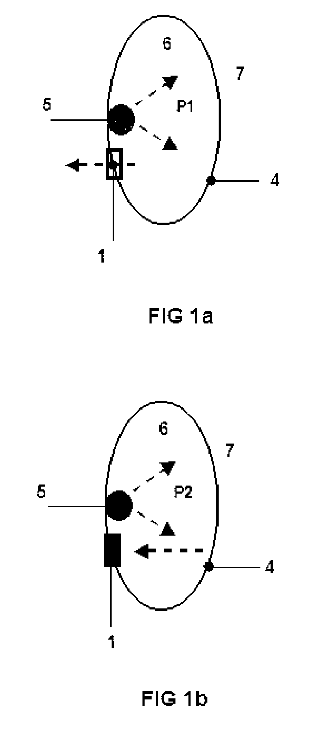

The operation of device 1 according to the invention is carried out by opening an airway between the airbag or bag 4 of the airbag module and the exterior, as may be observed in Figure 1a (for a level of pressure P1). To achieve this, an explosive charge 3 is detonated by an electrical signal through an electrical connector 8, starting from the air release closed position of Figure 1a (pressure level P2). The explosion generates a localised and controlled break in the body 2 of the air release device 1 of the invention. Once this break has occurred in part of the component of the body 2 of the device 1, the airway is opened, thus permitting part of the gas to be re-directed towards the exterior 7 of the airbag or bag 4.

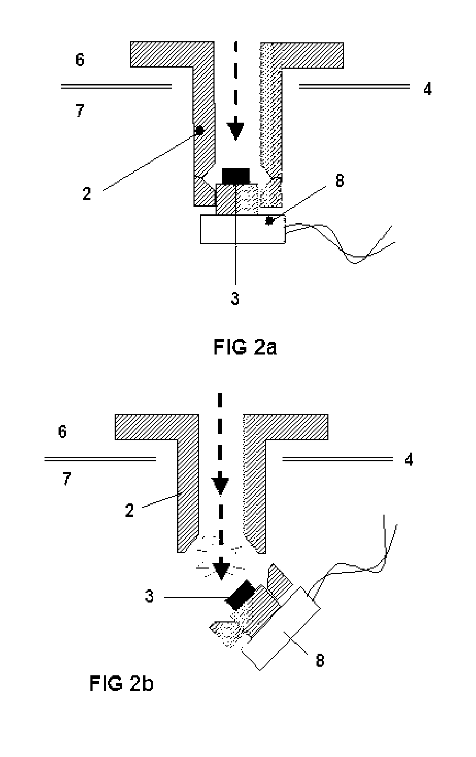

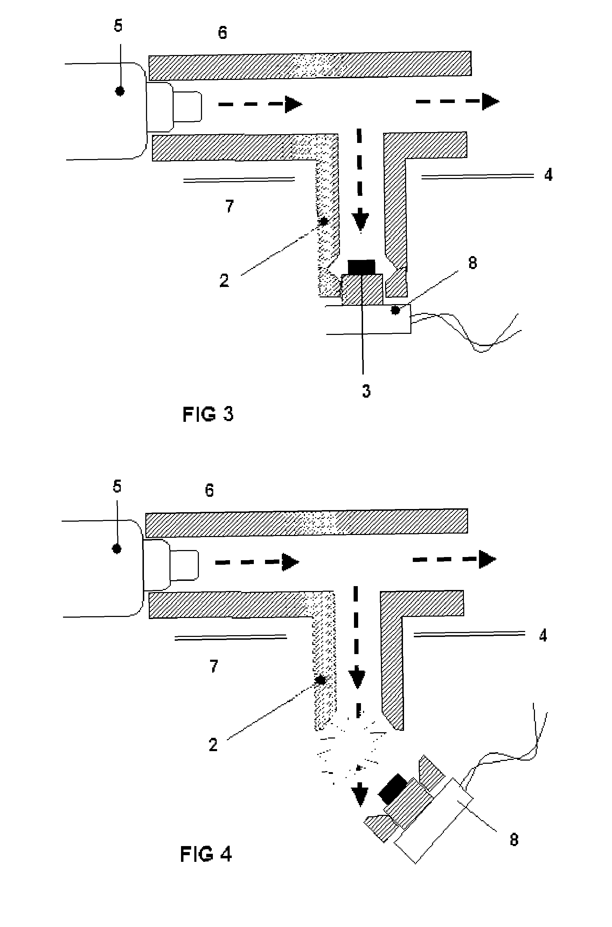

In Figures 2a and 2b, 3, and 4, the operation of the indicated air release device 1 according to the invention can be seen quite clearly.

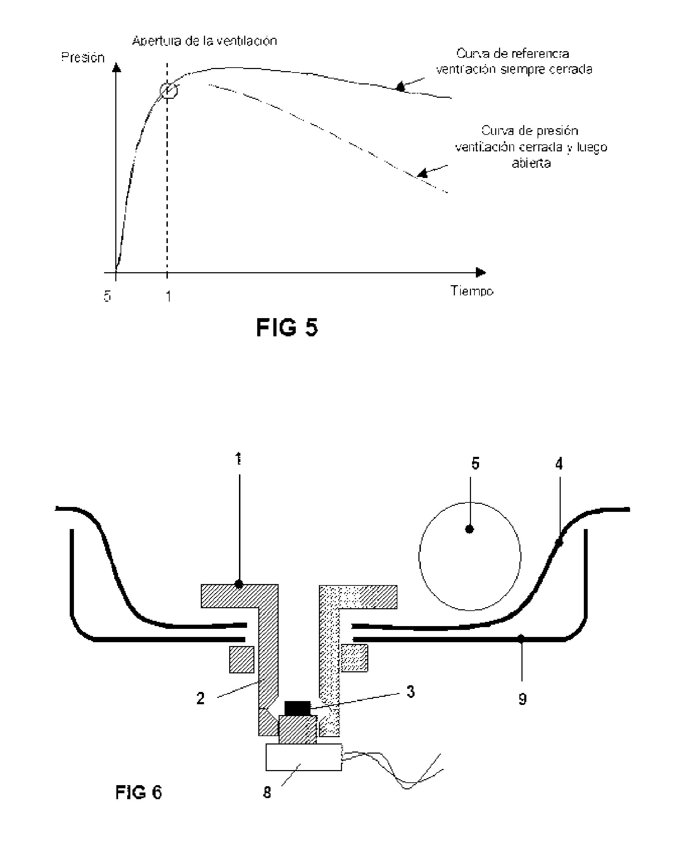

In the graph shown in Figure 5 the change in pressure over time with the release of air in a bag 4 of an airbag module fitted with a regulating device 1 according to the invention is plotted against the air release remaining closed as a reference or control. In this graph it may be seen that after the generator is activated, the regulating device 1 is triggered with a delay (t), and the pressure begins to reduce as from the moment of the detonation of said device 1 as a result of the increase in the area for the release of air.

The air release device 1 of the invention offers a range of options for incorporation into the airbag module, as will be shown in detail below.

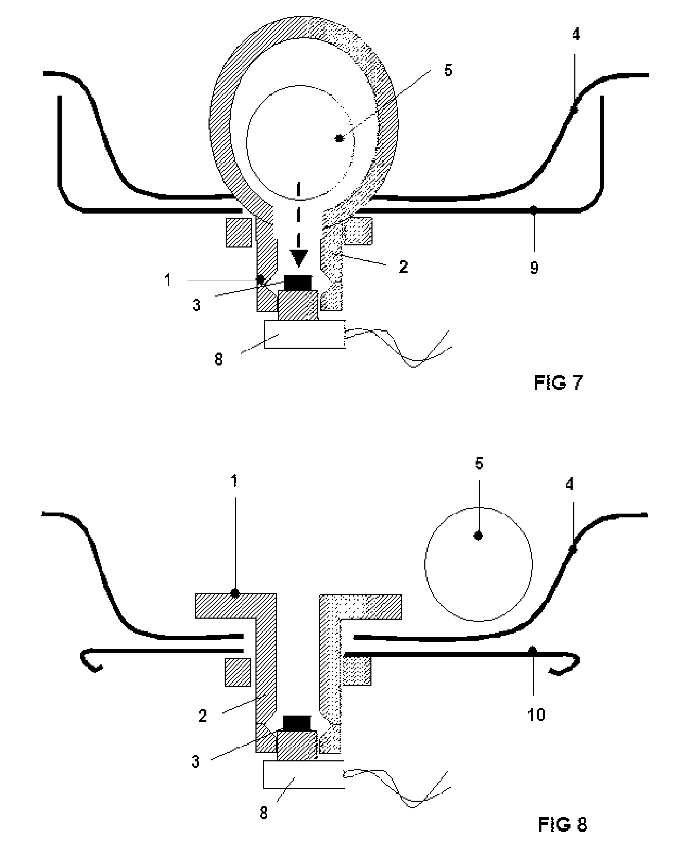

The characteristics of the device 1 of the invention mean that the said device 1 should preferably be located in a fixed area of the airbag module, as is shown in Figure 6. Thus in the case of airbag modules which have a body 9, whether on the front or on the side, the said device 1 may have a geometry adapted to be compatible with the geometry of the body 9 of the airbag module as may be seen in Figure 7.

In the case of airbag modules which do not incorporate a body 9, the active air release device 1 may be secured to another element of the module or directly to some component of the vehicle, such as, for example, the side structure of the seat 10, as is the case with side-impact models, and may be seen in Figure 8.

Furthermore, there are a range of options for securing the air release device 1 to the airbag module, as will be specified in detail below.

The active air release device of the invention may be secured to another component of the airbag module or the surrounding components of the vehicle, and this may be done by means of any independent securing element as may be used in other applications (screwed, clipped, keyed, heat-deformed, etc.). There is also the option that the said securing element may be incorporated into the body 2 itself of the device 1, and this last option is the most appropriate from any point of view.

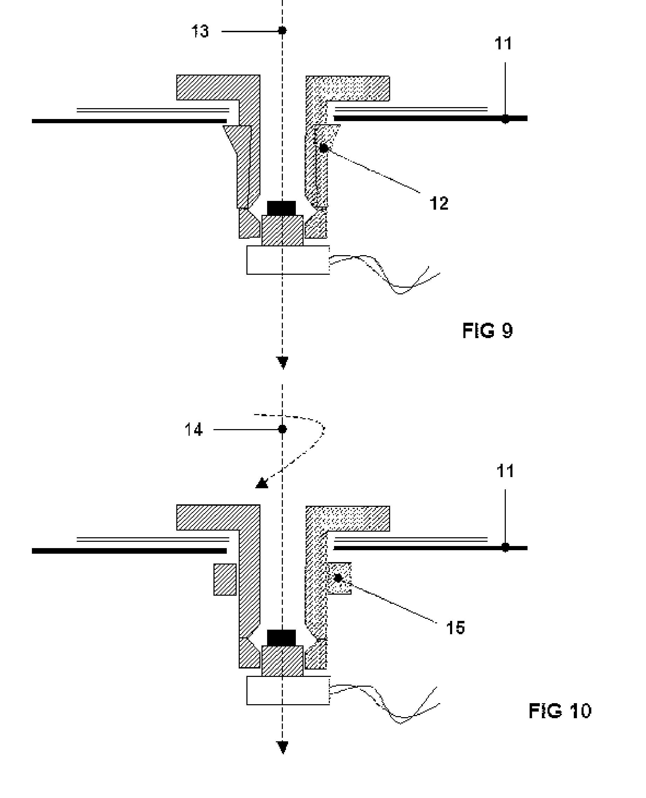

The option for securing by clips may be seen in Figure 9, which consists of securing the device 1 to element 11 of the airbag module or the surrounding parts of the vehicle by means of some clips 12, with a linear direction of assembly. The geometry and the number of the clips 12 may vary depending upon the effect to be achieved in each specific case.

The option for securing by means of a key may be seen in Figure 10, which consists of securing the device 1 to the element 11 of the airbag module or to the surrounding parts of the vehicle by means of a number of securing lugs 15 following a linear rotating direction of assembly 14. The geometry and the number of the securing lugs 15 may vary depending upon the effect to be achieved in each specific case.

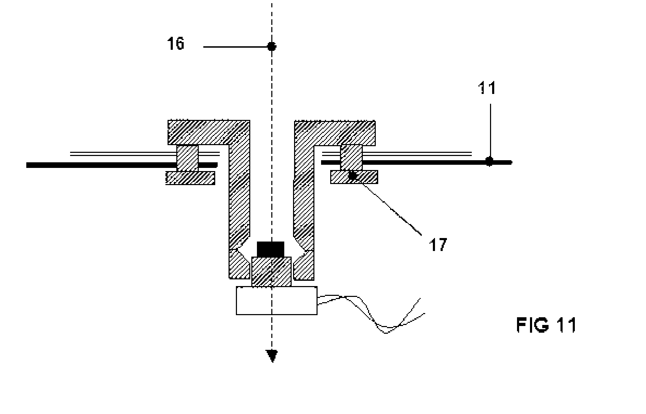

The option for securing by means of the deformation of the material may be seen in Figure 11, it being possible to effect such deformation by means of heat-deformation, ultra-sound, etc. This option consists of securing the device 1 to the element 11 of the airbag module or the surrounding parts of the vehicle by means of some lugs 17 modified for heat deformation, ultrasound or other means, with a linear direction of assembly 16. The geometry and the number of the modified lugs 17 may vary depending upon the effect to be achieved in each specific case.

Given their particular importance, the principal advantages obtained by using the device 1 according to the invention will be listed below, classified as: functional advantages, cost advantages, adjustment advantages, versatility advantages, incorporation advantages, and weight advantages.

### 1. Functional advantages

Among the practical advantages of the invention, the advantages of a functional nature may be highlighted. The device 1 of the invention makes it possible to obtain two or more levels of pressure from the same generating source or gas generator 5, without it being necessary to use complex systems to obtain this effect.

### 2. Cost advantages

From the point of view of costs, the device 1 of the present invention has advantages in respect of the other known solutions mentioned. For example, in the case mentioned in Background above of a Dual Stage generator, for example, it is practically twice the cost of a generator 5 of the type used in the device 1 of the invention, because all the components except for the diffuser are duplicated in the case of Dual Stage.

### 3. Adjustment advantages

In the event that it is necessary to carry out an adjustment of the release of air using the device 1 of the invention, this operation will be faster and will cost less than would be the case with a change in the generator. In view of the fact that the device only comprises one fixed element (the air release element, or device 1) in order to adjust the size of the flow of the gas it would be sufficient simply to increase or reduce the area of the airway in the section of the said device 1.

### 4. Versatility advantages

The solution of the device 1 of the invention is compatible with any type of generator 5 (single, dual, lateral, frontal, etc.) and with any type of airbag module (lateral or frontal). Nevertheless, other known solutions such as, for example, the Dual Stage generator are not versatile (a Dual Stage generator for side-impact applications cannot be used for frontal applications, and vice versa).

### 5. Incorporation advantages

Given that the device 1 of the invention is an independent component from the generator 5 and that it incorporates a fast securing system, the device 1 according to the invention is easily and simply incorporated into the airbag module.

### 6. Weight advantages

As has been mentioned above, the invention consists of a component which is independent of the generator 5 and which, depending on the application, may equally be coupled to the said generator 5 or be attached to any other element of the module separate from the generator 5. Further, the preferred materials for this application are in general plastics. Moreover, the functional requirements for the size of the device 1 are based upon the requirements for releasing the air from the airbag module, and it is therefore considered that in any case the device 1 will be a lightweight component.

Furthermore, given that the device 1 of the invention is independent of the generator 5, it may be applied to any type of airbag module, and combined with any type of generator 5 (Single Stage or Dual Stage) and therefore the range of pressure levels obtained is considerably greater that the range of pressure levels obtained with a generator 5.

In the preferred embodiments which have just been described modifications may be introduced which are within the scope defined by the following claims.

## Claims

1. Active air release system for the adaptation of a bag (4) of an airbag module to different impact scenarios, said bag (4) being inflated by the air which is generated by an air generator (5), **characterised by** comprising a device (1) which in turn comprises a body (2) and an explosive charge (3), said explosive charge being detonated by means of an electrical signal such that the body (2) of the device (1) provides an airway for the air generated by the generator (5) to the exterior of the bag (4) of the airbag module.

2. Active air release system according to claim 1 **characterised by** the device (1) being independent of the air generator (5) thus obtaining a wide range of operating levels in the indicated active system.

3. Active air release system according to any of the preceding claims **characterised by** the explosive charge (3) being detonated by an electrical signal by means of an electrical connector (8) from a closed air release position, with this explosion causing a controlled localised fracture in the body (2) of the device (1) the airway thus being opened such that part of the gas may be re-directed to the exterior (7) of the bag (4).

4. Active air release system according to any of the preceding claims **characterised by** the device (1) being located in a fixed area of the airbag module.

5. Active air release system according to claim 4 **characterised by** the device (1) being located in the body (9) of the airbag module and having a geometry which is compatible with the geometry of the said body (9).

6. Active air release system according to any of claims 1 to 3 **characterised by** the device (1) being secured to an element of the airbag module.

7. Active air release system according to any of claims 1 to 3 **characterised by** the device (1) being secured to an element of the vehicle.

8. Active air release system according to claim 7 **characterised by** the device (1) being secured to the lateral structure of the seat (10) of the vehicle.

9. Active air release system according to any of claims 6 to 8 **characterised by** the device (1) being secured by means of an independent securing element.

10. Active air release system according to any of claims 6 to 8
**characterised by** the device (1) being secured by means of a securing element incorporated into the body (2) of the device (1).

11. Active air release system according to any of claims 9 to 10
**characterised by** the device (1) being secured by means of clipping which consists of securing the said device (1) to an element (11) of the airbag module or the surrounding part of the vehicle by means of some securing clips (12) following a linear direction of assembly (13).

12. Active air release system according to any of claims 9 to 10
**characterised by** the device (1) being secured by means of keying which consists of securing the said device (1) to an element (11) of the airbag module or the surrounding part of the vehicle by means of modified lugs (15), following a linear and rotating direction of assembly (14).

13. Active air release system according to any of claims 9 to 10
**characterised by** the device (1) being secured by means of deforming the material which consists of securing the said device (1) to an element (11) of the airbag module or the surrounding part of the vehicle by means of modified lugs (17), following a linear direction of assembly (16).

14. Active air release system according to claim 13 **characterised by** the device (1) being secured by means of heat-deformation.

15. Active air release system according to claim 13 **characterised by** the device (1) being secured by means of ultrasound.
